# EUROPEAN PATENT SPECIFICATION

(11) **EP 4 217 796 B1**
(45) Date of publication and mention of the grant of the patent: **06.11.2024**
(21) Application number: 21786264.8
(22) Date of filing: 23.09.2021
(51) Int. Cl.: G03B 15/07, G10H 1/053, G10H 1/06

(54) **SYSTEM FOR CONVERTING IMAGES INTO SOUND SPECTRUM**
SYSTEM ZUR UMWANDLUNG VON BILDERN IN EIN TONSPEKTRUM
SYSTÈME POUR LA CONVERSION D'IMAGES EN SPECTRE SONORE

(30) Priority: 23.09.2020 IT 202000022453
(43) Date of publication of application: 02.08.2023
(73) Proprietor: Vitaletti, Andrea, 04016 Sabaudia (LT) (IT)
(72) Inventor: GRENGA, Augusto, 04015 Priverno (LT) (IT); VITALETTI, Andrea, 04016 Sabaudia (LT) (IT)
(74) Representative: Fezzardi, Antonio
(86) International application number: PCT/IB2021/058685
(87) International publication number: WO 2022/064416

(56) References cited:
- EP-A1- 2 323 368
- EP-A1- 3 588 928
- EP-A1- 3 693 934
- WO-A1-01/13336
- WO-A1-2007/071025
- WO-A1-2007/105927
- WO-A1-2013/080547
- WO-A1-2017/031421
- JP-A- 2013 138 384
- JP-A- H08 223 377
- US-A1- 2005 007 776
- US-A1- 2008 024 836
- US-A1- 2009 021 798
- US-A1- 2010 047 001
- US-A1- 2017 358 284
- US-B1- 6 747 764
- MICHAEL BANF ET AL: "Sonification of images for the visually impaired using a multi-level approach", 20130307; 1077952576 - 1077952576, 7 March 2013 (2013-03-07), pages 162 - 169, XP058014614, ISBN: 978-1-4503-1904-1, DOI: 10.1145/2459236.2459264
- SANZ PABLO REVUELTA ET AL: "Scenes and Images into Sounds: A Taxonomy of Image Sonification Methods for Mobility Applications", JAES, AES, 60 EAST 42ND STREET, ROOM 2520 NEW YORK 10165-2520, USA, vol. 62, no. 3, 20 March 2014 (2014-03-20), pages 161 - 171, XP040637004, DOI: 10.17743/JAES.2014.0009
- WOON SEUNG YEO ET AL: "APPLICATION OF RASTER SCANNING METHOD TO IMAGE SONIFICATION,SOUND VISUALIZATION, SOUND ANALYSIS AND SYNTHESIS", no. DAFX-309, 18 September 2006 (2006-09-18), pages 1 - 6, XP002747780, Retrieved from the Internet <URL:https://ccrma.stanford.edu/~woony/publications/Yeo_Berger-DAFx06.pdf>
- LUI SIMON: "Generate expressive music from picture with a handmade multi-touch music table", PROCEEDINGS OF THE INTERNATIONAL CONFERENCE ON NEW INTERFACES FOR MUSICAL EXPRESSION, 3 June 2015 (2015-06-03), Baton Rouge, LA, USA, pages 374 - 377, XP055807853, Retrieved from the Internet <URL:https://www.nime.org/proceedings/2015/nime2015_191.pdf> [retrieved on 20210526], DOI: 10.5281/zenodo.1179121

## Description

The present invention relates to the field of optical devices for the acquisition and analysis of man-made shapes, images, colors, and signs, allowing a synesthetic experience through the association of sounds with the produced graphic elements and applicable in various communicative contexts, e.g., such as in the field of interactive videogames, computer science, neuroscience and neuroimaging, in the medical field for therapy (color therapy and music therapy) and/or neurostimulation through BCI (Brain-Computer Interface), HCI (Human-Computer Interaction) and SSD (Sensory Substitution Device), in visual arts, in social arts, but also usable in the pedagogical field.

The invention consists of a system according to claim 1 and method according to claim 10, the system comprises a device designed to generate a sound, from an image either chosen or produced by a user through a specific image capturing tool and software for processing it and associating the sound; the invention is usable in various contexts ranging from recreational to artistic or even educational.

Devices such as overhead projectors on which it is possible to project previously prepared images, such as photographs or the like, and slides written either beforehand or at the moment, are currently known.

Image projection devices are also known, which work both by means of slides, obviously prepared beforehand, and by acquiring images from digital media and in digital format.

In any case, these known devices allow only the projection of the image which is acquired by the device, and the graphic processing of the image is possible only by using the overhead projectors.

None of the devices listed above also allows associating a specific sound with the projected graphic element. Further, WO 2007/105927 A1 discloses an image to sound conversion system providing an image pickup and processing means. The image to sound mapping is made based on HSV scales or hue brightness and saturation and pitch, octave, timber and position of sound. $

Publication "Generate expressive music from picture with a handmade multi-touch music table" by Lui Simon et al. in the Proceedings of the International Conference on New Interfaces for Musical Expression 3 June 2015 (2015-06-03), pages 374-377, Baton Rouge, LA, USA, discloses a multi-touch music table for expressive musical performance. The user touches the picture projected on the table glass surface to perform music and can click, drag or use various multi-touch gestures with fingers to perform music expressively. The picture color, luminosity, size, finger gesture and pressure parameters determine the music output.

Finally, US 2017/358284 A1 relates to an image to audio sound conversion system based on an image picked up by generally known image picking up devices such as camera or a scanner. The frequency content of the image is mapped onto audio parameters based on a block dividing function derived from a simplified image. Sounds are associated to rows of image pixels and a set of colour thresholds are provided to enable triggering certain notes based on the RGB information of each pixel. $

The present invention allows generating/associating a specific sound with any graphic element, said graphic element possibly being a line, a shape, a photograph, or simply a color.

Furthermore, the invention also allows the association of specific sounds with graphic elements generated at the moment, as a function of the space occupied by the latter and the time taken to generate them (DRAWING).

According to the invention, such a sound association/creation is achieved by using a hardware medium in combination with dedicated software capable of:
- acquiring the graphic element placed on the hardware platform; and
- at the same time associating/generating a sound with the acquired image.

This allows the user to interact and compose coherently through the space/time of the visible matter (visible spectrum of the drawing) and the space/time of the audible matter (sound spectrum of the waveform), in order to control directly the modulation of sound frequencies (additive sound synthesis) from the color through the drawing (additive RGB mixing), thus generating sound at every variation in space and time.

A better understanding of the invention will be achieved by means of the following detailed description and with reference to the accompanying drawings, which show a preferred embodiment by way of non-limiting example.

In the drawings:

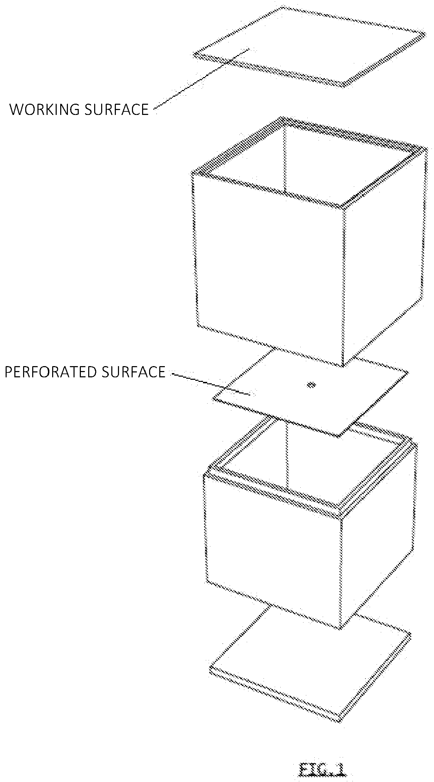

Figure 1 is a perspective exploded view of the hardware module.

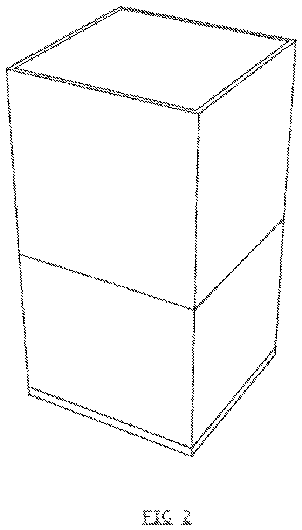

Figure 2 is a perspective view of the acquisition module.

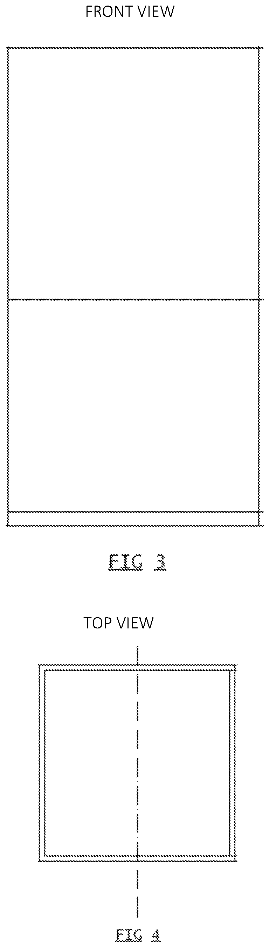

Figure 3 is a front view of the invention.
Figure 4 is a top view of the invention.

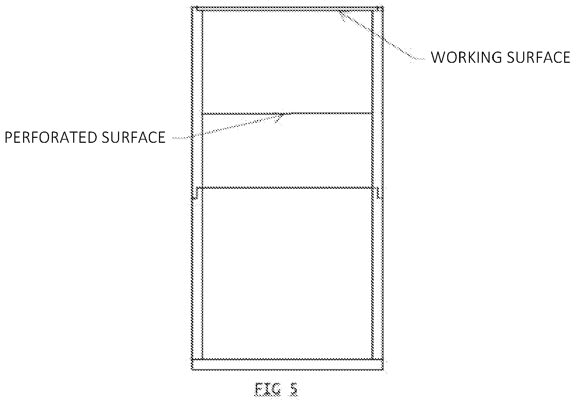

Figure 5 shows a front sectional view of the invention in which the working surface and the perforated surface are visible.

With reference to the figures listed above, the present invention comprises a hardware device which allows performing the analog image insertion operations and in which a system for acquiring the produced images is provided; the latter works in combination with a software component which allows the images to be acquired, processed, and encoded appropriately and finally converted from analog (original form) to digital as an acoustic spectrum.

### Hardware

The hardware device substantially consists of an external module which, in a preferred but non-limiting embodiment, is shaped as a parallelepiped with a square base.

Said module is internally divided into two different superimposed parts and separated by a panel parallel to the bases which defines two superimposed compartments and which is provided with a hole in which the video acquisition device is housed, preferably consisting of a camera oriented towards the upper base.

The upper base consists of a transparent material plate and serves the function of working and measuring space.

This transparent plate, which forms the working surface, is preferably made of high-clarity glass with a single-layer, anti-reflective treatment applied to the part of the plate facing the inside of the module, i.e., towards the camera or other image acquisition device.

Said glass plate is made to maximize light transmission by eliminating the undesired reflections and refractions while maintaining the correct chromatic characteristics of the light passing therethrough.

The upper part between the glass plate and the surface containing the imaging device is internally provided with laterally arranged lighting means.

In a preferred but non-limiting embodiment, the lighting means comprise LEDs and opaque glass, more specifically the invention provides at least two LEDs arranged on two opposite side surfaces of the upper part of the module and housed inside light units embedded in the supporting structure of the module; advantageously, the LEDs are equipped with white opal diffuser glass.

The lower part, between the surface containing the image acquisition device and the lower base of the module, is entirely covered with a material adapted to absorb light and which allows avoiding the diffusion and refraction of undesired lights and reflections inside the module; this lower part substantially consists of a technical compartment to allow possible maintenance actions or adjustments of the sensor, as well as to obtain a sufficiently high module to operate without needing support surfaces for the structure.

It is worth noting that it is also possible not to provide said technical compartment underneath, e.g., by constraining the sensor directly to the bottom of the top.

According to the invention all the surfaces of the top are also coated with the light-absorbing material, except for the transparent plate and the lighting means.

In a preferred but non-limiting embodiment, said light-absorbing material is preferably black velvet.

The lighting means are such as to ensure a correct illumination of the working space, as well as a homogeneous diffusion of the light in the upper part of the module which ensures uniformity of illumination without shadows or reflections with respect to the lens of the acquisition device, so as not to create areas which are too bright or too in shade and distort the image acquisition.

According to the invention, the image acquisition device is a camera, which consists of a USB module with a CMOS sensor and an interchangeable lens.

The choice of the sensor is mainly related to the number of pixels that the software can use for the acquisition; the increase in the pixel management capacity of the software may be followed by a different choice of acquisition device oriented towards devices having a higher resolution because there is no resolution-sensitivity-dimension constraint related to the device which is described.

According to the invention, the acquisition device will be able to work both in RGB (color) mode and in grayscale (monochrome) mode; for this purpose, the device can be chosen from a monochrome and a color sensor, with the possibility to interchange them.

In addition to maintaining an ideal viewing angle, the lens configuration is determined by the need to "isolate" the two-dimensional working surface, through the depth-of-field effect (normally given by the lenses), so as to focus only on that surface and exclude everything which is beyond the working surface, through a progressive blurring (physiological to all optical systems with lenses, which is created by gradually moving away from the focus point, which here is the outer surface of the glass plate); this separation effect between the two-dimensional surface and everything which is beyond the surface is conceived as an aid to the acquisition software which is facilitated in distinguishing between what is placed/created/traced on the working surface and everything which is beyond, in the surrounding environment and in front of the glass itself (operator, ambient light, etc.); this aid for the software in selecting the figures by selecting the focus of the surface maximizes the system accuracy, thus ensuring that the sound conversion of the images is as concentrated as possible on the images/shapes created/placed on the surface rather than those present beyond.

In a preferred but non-limiting embodiment, the sensor selected is a Sony IMX322 sensor (1/2.9 inch diagonal size, 2.07Mpx, HD 1920p) and was chosen after careful analysis and is a good compromise between sensor size, shooting fluidity, image quality, light sensitivity, dynamic range, cost, and availability.

In the (non-limiting) constructional example described, the shooting optics consist of a lens for 1/2.7 inch format sensors with varying focal length of F 2.8-12, focal ratio f 1.4, manual focus, and CS thread mount dedicated to CCTV cameras.

The arrangement of the camera, i.e., of the image acquisition device, was established by calculating a field angle between 40° and 55° to simulate a viewing angle similar to that of the human eye, and decrease the natural geometric distortions caused by the shooting optics.

Advantageously, this choice contributes to the correct selection and calibration of the focus plane of the optics on the two-dimensional working area represented by the transparent plate.

Furthermore, an integrated electronic board equipped with local cooling means for the sensor/processor system is provided, preferably of the Peltier cell type with 12V power supply and RMS power of 60W, also provided with an axial fan powered at 12V and integrated aluminum heat sink, required for the disposal of the heat generated by the continuous and prolonged operation of the CMOS sensor inside the module.

Advantageously, the cooling system limits the signal degradation due to heat development, thus limiting the "dark noise" effect, i.e., the so-called "thermal noise."

As mentioned, in the example shown, the surface containing the camera is arranged parallel to the two upper and lower bases and at a distance from the transparent plate such as to ensure a correct shooting angle, e.g. 80 cm.

In the preferred, non-limiting embodiment described hereto, the hardware is substantially a parallelepiped of a height of about 110 cm and a square base; the glass plate used as the upper base and working surface has a size of 50x50cm and a thickness of 1.5cm; the surface containing the acquisition device is advantageously placed at a distance of about 80 cm from the glass plate placed on the upper base.

### Software

As mentioned, the hardware component works in combination with a software component the purpose of which substantially is to convert the light spectrum into the acoustic spectrum.

Such a linear conversion allows the user to modulate and control the additive synthesis of waveforms produced over time (sound) through their own actions to move/draw images on the acquisition surface (space) during a given time interval (time). The ultimate goal is to allow full control of the synthetic modulation of sounds (WAVEFORMS) as a function of the images moved or drawn by the user.

In the described example, the software in hand was developed as a patch, or extension, of a commercially known program such as MAX MSP by Cycling'74.

Max is a graphical development environment for music and multimedia designed and updated by the software company Cycling '74, based in San Francisco, California, and has been used for over fifteen years by composers, performers, software designers, researchers, and artists interested in creating interactive software.

An API allows third parties to develop new routines (referred to as external objects). As a result, Max has a large user base of programmers - not related to Cycling '74 - who enhance the software with (commercial and non-commercial) extensions to the program.

Precisely by virtue of its extensible design and graphical interface, Max is commonly considered a sort of *lingua franca* for the software development related to interactive music.

The processed patch detects the RGB values of the video and converts them into audio frequencies; therefore, each frequency will have its own intensity and duration derived from the saturation and brightness, respectively.

The operation of the patch is as follows: only the controls available to the operator are displayed on the patch start page, or presentation mode, these are:
- A drop-down menu, which allows selecting the camera to be used, i.e., the webcam installed in the hardware or that built into the computer;
- A switch, which allows starting the data communication between the camera and the patch with a frame rate expressed in milliseconds and adjustable in the object to the right of the switch;
- An offset adjustment panel, which allows adjusting, within the video matrix, the pixel from which to start the list of RGB values; said list can comprise from a minimum of 1 to a maximum of 30 pixels and the size of the list is adjustable with a special panel;
- A "fader" bar for adjusting the audio output volume and turning the audio engine on or off;
- A panel for saving settings and for creating and switching between saved settings.

According to the invention, the patch is configured to map the working area and allow a coherent generation/transformation (input-output) of sinusoidal waveforms over time (sound) through the acquisition of images moved or drawn by the user in the working space (drawing); the video image is processed within an RGB matrix with a size, e.g., 640*480 pixels compatibly with the performance of the software that, in the version used, does not support the number of calculations required for the processing of higher resolutions.

Each pixel in this matrix is defined by three values which are related to the saturation of the red (R), green (G), and blue (B) values; each of these values is in a range from 0 to 255.

The matrix of RGB values from the workspace used by the user is converted by the program as a frequency matrix: the three RGB values of each individual pixel are added over time, and their sum value (additive mixture of the RGB values used over time) is converted into a sound frequency value (additive synthesis of the sound frequency values from the space occupied by the images) which lies in a range from 64 to 8000 Hz, according to a relationship which could be defined as one of substantially direct proportionality such that, for example, as the sum of RGB values increases, the frequency of the corresponding sound will approach the upper end of the frequency range, thus allowing the user to perform a sound modulation in real-time (additive synthesis of sounds over time) through the neuromotor activity related to drawing and images moved/drawn on the surface (additive mixing of colors in space).

In other words, each user-generated image variation in SPACE and TIME (i.e., in the time it took to make that variation), corresponds to a degree of additive mixing of RGB values in space, which is directly proportional to a degree of additive synthesis of sounds over time. Such a percentage ratio is closely related to the values of the HSL array, space, and time, and allows the user to modulate the sinusoidal waveforms through his/her actions on the images (pixels and RGB values). Said sum of RGB values corresponds to the additive mixture of color frequencies used by the user in the image space in a given time interval, and is directly related (or proportional) to the additive synthesis of sounds generated over time as a result of the actions by the user himself/herself.

The RGB matrix, obtained for all the acquired image, is converted utilizing commercial programs into a new matrix with HSL values (opacity, saturation, and brightness) of 640*480 pixels in size. Where these HSL values, which are related to the space and time corresponding to image variations, allow the user to use the visible spectrum of RGB values to modulate the sound spectrum of frequency values.

Again in this case, the software component extracts two lists of values, related to both brightness and saturation, between 0 and 255 for each pixel of the matrix.

According to the invention, the brightness value is interpreted and converted by the software component as a sound duration value, while the saturation value corresponds to the sound intensity and is thus dependent on the amount of color (RGB) detected by the camera.

It is known that the parameters which define a sound are frequency, intensity, and duration; thus all the values identified by the software component allow associating, with each detected pixel, a frequency (sum of R, G, and B values converted into the auditory frequency range), an intensity (corresponding to the saturation value from the HSL array), and a duration (corresponding to the brightness value from the HSL array), and therefore a sound.

In this respect, it is worth noting that, according to a specific feature of the invention, the particular choice of the aforesaid parameters to generate a sound, from the image acquired from the transparent flat surface of said hardware component (Visible Spectrum => Sound Spectrum), is innovative and original in that it allows taking into account the SPACE (which determines the output sound intensity) occupied by the image moved or drawn by the user and the TIME (which determines the output sound duration) taken by the user to draw that image on the transparent surface of the hardware component.

### Operation

According to the invention, the camera sensor acquires the image by either placing or translating an image on the glass plate or even drawing it directly thereon.

Through the software component it is possible to manage, as mentioned, the data transmission from the hardware component, which data are received by the software component itself, which elaborates them attributing some RGB color "quantity" values to each identified pixel, which values form the frequency of the sound to be associated.

This RGB matrix is converted into an HSL array the saturation and brightness values of which define the intensity and duration of the sound, respectively.

The three values of frequency, intensity, and duration thus obtained uniquely define a sound related to a specific pixel.

It is worth noting that each sign drawn and/or each image placed on the plate corresponds to a specific sound because the matrix is processed in real-time, so even a "movement" of the image from one point to another of the glass plate will result in a variation in the parameters mentioned above and a consequent sound variation.

A variant of the invention (not shown) provides for the additional use of a neuroimaging apparatus, e.g., of the type comprising a helmet which is wearable by a user/subject to detect brain activity while drawing, where said apparatus generates images of the subject's brain activity in real time, and where said images are used, in addition to those drawn on the transparent surface of the hardware component, to generate an overall sound given by the sum of the sounds generated from the drawn images and the sounds generated from the images of the corresponding brain activity.

Thereby, the overall sound, generated by this variant of the invention, would take into account not only the image drawn by the user but also the effect on his/her brain (through the image of his/her brain activity) while:
- it is stimulated by the vision of what is being drawn;
- it is stimulated by the movements made to draw;
- it is stimulated by the sounds heard and generated through the invention.

The overall sound thus depends not only on the drawn image but also on the stimuli of the subject drawing it, while it is being drawn.

## Claims

1. A system for the real-time acquisition, analysis, and conversion of the visual spectrum of shapes, images, colors, and signs into sound spectrum, which is usable in various communicative contexts, such as in the field of interactive videogames, computer science, neuroscience and neuroimaging in the medical field, visual arts, social arts, but also in the pedagogical field, comprising a hardware component for the analog optical acquisition of the images either moved or drawn on a transparent flat surface of said hardware component, and a software component for processing the acquired images and converting the visual spectrum thereof into sound spectrum;
wherein the hardware component comprises a chamber, the upper base of which substantially consists of a transparent material plate and on the lower base of which an image acquisition device is accommodated, facing the transparent plate and configured to frame it completely; wherein the side walls are provided with lighting means configured to ensure a correct illumination of the inner surface of the transparent plate which forms a working space, as well as a homogeneous diffusion of the light in the upper part of the chamber itself which ensures uniformity of illumination without shadows or reflections with respect to the lens of the acquisition device, so as not to create areas which are too bright or too in shade and distort the image acquisition;
and **characterised in that** the software component is configured to detect every RGB value of each pixel acquired by the acquisition device, and process and convert the values detected in order to associate, with each of the acquired pixels, three values consisting of, respectively:
- a sound frequency value, given by the sum of the R, G and B values converted into the auditory frequency range;
- a sound intensity value, corresponding to the saturation value from the HSL array, wherein said saturation value, and thus said sound intensity value, is correlated to the space occupied by said images either moved or drawn on the flat transparent surface of the hardware component;
- a sound duration value, corresponding to the brightness value from the HSL array, wherein said brightness value, and thus said sound duration value, is correlated to the time it took to move or draw said images on the flat transparent surface of the hardware component;
wherein said three values correspond to a specific sound associated with a specific acquired pixel.

2. A system according to claim 1, **characterized in that** it includes at least two opposite lighting means.

3. A system according to one or more of the preceding claims, **characterized in that** all the inner surfaces of the chamber, except for the plate made of glass or another transparent material and the lighting means, are coated with a light-absorbing material which allows avoiding the diffusion and refraction of unwanted light and reflections inside the module.

4. A system according to the preceding claim, **characterized in that** the light-absorbing material is an adhesive black velvet coating.

5. A system according to claim 1, **characterized in that** said image acquisition device is configured to transmit the images to said dedicated software component, adapted to carry out the conversion from the visual spectrum to the audio spectrum.

6. A system according to claim 1 or 5, **characterized in that** said image acquisition device is interchangeable, being selectable between color or monochrome devices and with different pixel resolutions.

7. A system according to claim 1 **characterized in that** said image acquisition device is provided with a lens the configuration of which is such as to "isolate" the two-dimensional working surface, through the depth-of-field effect, so as to have only the outer surface of the transparent plate in focus, and excluding everything beyond the working surface through a progressive optical blur.

8. A system according to the preceding claim, **characterized in that** the arrangement of the image acquisition device is established by calculating a field angle between 40° and 55° so as to simulate a view angle which is similar to that of the human eye and reduce the natural geometric distortions caused by the shooting optics, thus contributing to the correct selection and calibration of the focus plane of the optics itself on the two-dimensional working area represented by the transparent plate.

9. A system according to claim 1, **characterized in that** said software component substantially consists of a patch which acts on a commercial program, known as MAX MSP by Cycling'74, for example.

10. A method for the real-time acquisition, analysis, and conversion of the visual spectrum of shapes, images, colors and signs into sound spectrum, which is usable in various communicative contexts, such as in the field of interactive videogames, computer science, neuroscience and neuroimaging in the medical field, visual arts, social arts, but also in pedagogical field, including using a system comprising at least one hardware module, comprising image acquisition means, and a software module, wherein said modules are functionally connected to acquire the visual spectrum of the images and process it to convert the visual spectrum into a sound spectrum according to the following steps:
• acquiring the image which is moved or drawn on a flat transparent working surface of the hardware module by the image acquisition means by means of an optical device with detection of the pixels of said image;
• processing the acquired image pixels by the software module to detect each RGB value of each acquired pixel;
**characterised by**
• processing and converting the detected RGB values into HSL values in order to associate, with each of the acquired pixels, three values consisting of, respectively: a sound frequency value, given by the sum of the R, G and B values converted into the auditory frequency range; a sound intensity value, corresponding to the saturation value from the HSL array, and a sound duration value, corresponding to the brightness value from the HSL array,
wherein:
- said saturation value, and thus said sound intensity value, is correlated to the space occupied by said images either moved or drawn on the flat transparent surface of the hardware module; and
- said brightness value, and thus said sound duration value, is correlated to the time it took to move or draw said images on the flat transparent surface of the hardware module.

11. A system according to claim 1 **characterized in that** it further comprises a neuroimaging generation apparatus, configured to:
- acquire data related to the brain activity of a user who is moving or drawing said images on the transparent flat surface of said hardware component in real-time, and
- generate the corresponding image of said brain activity in real-time;
wherein said software component is configured to also process said image of brain activity and generate a sound which is addable to the that generated by the processing of the images acquired by said image acquisition means.

## Patentansprüche

1. System zur Echtzeiterfassung, -analyse undkonvertierung des visuellen Spektrums von Formen, Bildern, Farben und Zeichen in ein Tonspektrum, welches in verschiedenen kommunikativen Kontexten verwendbar ist, wie beispielsweise im Bereich interaktiver Videospiele, der Computerwissenschaft, der Neurowissenschaft und der Neurobildgebung in der Medizin, der bildenden Künste, der sozialen Künste, aber auch in der Pädagogik, Folgendes umfassend
eine Hardwarekomponente zur analogen optischen Erfassung der Bilder, welche auf einer transparenten ebenen Oberfläche der Hardwarekomponente entweder bewegt oder gezeichnet werden, und eine Softwarekomponente zum Verarbeiten der erfassten Bilder und zum Konvertieren ihres visuellen Spektrums in ein Tonspektrum;
wobei die Hardwarekomponente eine Kammer umfasst, deren obere Basis im Wesentlichen aus einer Platte aus transparentem Material besteht und auf deren unterer Basis eine Bilderfassungsvorrichtung untergebracht ist, welche der transparenten Platte zugewandt ist und eingerichtet ist, um sie vollständig abzubilden; wobei die Seitenwände mit Beleuchtungsmitteln versehen sind, welche eingerichtet sind, um eine korrekte Beleuchtung der inneren Oberfläche der transparenten Platte, welche einen Arbeitsraum ausbildet, sowie eine homogene Streuung des Lichts im oberen Teil der Kammer selbst zu gewährleisten, was eine gleichmäßige Beleuchtung ohne Schatten oder Reflexionen in Bezug auf die Linse der Erfassungsvorrichtung gewährleistet, um keine Bereiche zu erzeugen, welche zu hell oder zu abgeschattet sind, und die Bilderfassung nicht zu verzerren;
und **dadurch gekennzeichnet, dass**
die Softwarekomponente eingerichtet ist, um jeden RGB-Wert jedes Pixels zu detektieren, welcher durch die Erfassungsvorrichtung erfasst wird, und die detektierten Werte zu verarbeiten und umzuwandeln, um jedem der erfassten Pixel drei Werte zuzuordnen, welche jeweils aus Folgendem bestehen:
- einem Tonfrequenzwert, welcher durch die Summe der R-, G- und B-Werte gegeben ist, welche in den Hörfrequenzbereich konvertiert wurden;
- einem Tonintensitätswert, welcher dem Sättigungswert aus dem HSL-Array entspricht, wobei der Sättigungswert und somit der Tonintensitätswert mit dem Raum korreliert ist, welcher von den Bildern eingenommen wird, welche auf der ebenen transparenten Oberfläche der Hardwarekomponente entweder bewegt oder gezeichnet werden;
- einem Tondauerwert, welcher dem Helligkeitswert aus dem HSL-Array entspricht, wobei der Helligkeitswert und somit der Tondauerwert mit der Zeit korreliert ist, welche benötigt wurde, um die Bilder auf der ebenen transparenten Oberfläche der Hardwarekomponente zu bewegen oder zu zeichnen;
wobei die drei Werte einem spezifischen Ton entsprechen, welcher einem spezifischen erfassten Pixel zugeordnet ist.

2. System nach Anspruch 1, **dadurch gekennzeichnet, dass** es mindestens zwei gegenüberliegende Beleuchtungsmittel umfasst.

3. System nach mindestens einem der vorhergehenden Ansprüche, **dadurch gekennzeichnet, dass** alle Innenflächen der Kammer, mit Ausnahme der Platte, welche aus Glas oder einem anderen transparenten Material angefertigt ist, und der Beleuchtungsmittel, mit einem lichtabsorbierenden Material beschichtet sind, welches die Streuung und Brechung von unerwünschtem Licht und Reflexionen innerhalb des Moduls verhindert.

4. System nach dem vorhergehenden Anspruch, **dadurch gekennzeichnet, dass** das lichtabsorbierende Material eine klebende schwarze Samtbeschichtung ist.

5. System nach Anspruch 1, **dadurch gekennzeichnet, dass** die Bilderfassungsvorrichtung eingerichtet ist, um die Bilder an die dedizierte Softwarekomponente zu übertragen, welche eingerichtet ist, um die Konvertierung von dem visuellen Spektrum in das Audiospektrum durchzuführen.

6. System nach Anspruch 1 oder 5, **dadurch gekennzeichnet, dass** die Bilderfassungsvorrichtung austauschbar ist und zwischen Farb- oder Monochromvorrichtungen und mit unterschiedlichen Pixelauflösungen auswählbar ist.

7. System nach Anspruch 1, **dadurch gekennzeichnet, dass** die Bilderfassungsvorrichtung mit einer Linse versehen ist, deren Konfiguration derartig ist, die zweidimensionale Arbeitsfläche durch die Schärfentiefewirkung zu "isolieren", so dass nur die Außenfläche der transparenten Platte im Fokus ist und alles über die Arbeitsfläche hinaus durch eine progressive optische Unschärfe ausgeschlossen ist.

8. System nach dem vorhergehenden Anspruch, **dadurch gekennzeichnet, dass** die Anordnung der Bilderfassungsvorrichtung durch Berechnen eines Feldwinkels zwischen 40° und 55° erstellt wird, um einen Blickwinkel zu simulieren, welcher dem des menschlichen Auges ähnlich ist, und die natürlichen geometrischen Verzerrungen zu reduzieren, welche durch die Aufnahmeoptik verursacht werden, und folglich zur korrekten Auswahl und Kalibrierung der Fokusebene der Optik selbst auf der zweidimensionalen Arbeitsfläche beizutragen, welche durch die transparente Platte repräsentiert wird.

9. System nach Anspruch 1, **dadurch gekennzeichnet, dass** die Softwarekomponente im Wesentlichen aus einem Patch besteht, welcher auf ein gewerbliches Programm wirkt, welches beispielsweise als MAX MSP by Cycling'74 bekannt ist.

10. Verfahren zur Echtzeiterfassung, -analyse und - konvertierung des visuellen Spektrums von Formen, Bildern, Farben und Zeichen in ein Tonspektrum, welches in verschiedenen kommunikativen Kontexten verwendbar ist, wie beispielsweise im Bereich interaktiver Videospiele, der Computerwissenschaft, der Neurowissenschaft und der Neurobildgebung in der Medizin, der bildenden Künste, der sozialen Künste, aber auch in der Pädagogik, Folgendes umfassend
Verwenden eines Systems, welches mindestens ein Hardwaremodul, welches ein Bilderfassungsmittel umfasst, und ein Softwaremodul umfasst, wobei die Module funktional verbunden sind, um das visuelle Spektrum der Bilder zu erfassen und dieses zu verarbeiten, um das visuelle Spektrum gemäß den folgenden Schritten in ein Tonspektrum zu konvertieren:
• Erfassen des Bildes, welches auf einer ebenen transparenten Arbeitsfläche des Hardwaremoduls bewegt oder gezeichnet wird, durch das Bilderfassungsmittel mittels einer optischen Vorrichtung mit Detektion der Pixel des besagten Bildes;
• Verarbeiten der erfassten Bildpixel durch das Softwaremodul, um jeden RGB-Wert jedes erfassten Pixels zu detektieren;
**dadurch gekennzeichnet, dass**
• Verarbeiten und Konvertieren der detektierten RGB-Werte in HSL-Werte, um jedem der erfassten Pixel drei Werte zuzuordnen, welche jeweils aus Folgendem bestehen: einem Tonfrequenzwert, welcher durch die Summe der R-, G- und B-Werte gegeben ist, welche in den Hörfrequenzbereich konvertiert wurden; einem Tonintensitätswert, welcher dem Sättigungswert aus dem HSL-Array entspricht, und einem Tondauerwert, welcher dem Helligkeitswert aus dem HSL-Array entspricht,
wobei:
- der Sättigungswert und somit der Tonintensitätswert mit dem Raum korreliert ist, welcher von den Bildern belegt wird, welche auf der ebenen transparenten Oberfläche des Hardwaremoduls entweder bewegt oder gezeichnet werden; und
- der Helligkeitswert und somit der Tondauerwert mit der Zeit korreliert ist, welche benötigt wurde, um die Bilder auf der ebenen transparenten Oberfläche des Hardwaremoduls zu bewegen oder zu zeichnen;

11. System nach Anspruch 1, **dadurch gekennzeichnet, dass** es weiterhin eine Neurobildgebungs-Erzeugungsvorrichtung umfasst, welche eingerichtet ist, um:
- Daten im Zusammenhang mit der Gehirnaktivität eines Benutzers in Echtzeit zu erfassen, welcher die Bilder auf der transparenten ebenen Oberfläche der Hardwarekomponente bewegt oder zeichnet, und
- das entsprechende Bild der Gehirnaktivität in Echtzeit zu erzeugen;
wobei die Softwarekomponente eingerichtet ist, um auch das Bild der Gehirnaktivität zu verarbeiten und einen Ton zu erzeugen, welcher zu dem addiert werden kann, welcher durch das Verarbeiten der Bilder erzeugt wird, welche durch das Bilderfassungsmittel erfasst wurden.

## Revendications

1. Système pour l'acquisition, l'analyse, et la conversion en temps réel du spectre visuel de formes, d'images, de couleurs, et de signes en spectre sonore, qui peut être utilisé dans divers contextes de communication, tels que dans le domaine des jeux vidéo interactifs, de la science informatique, des neurosciences et de la neuroimagerie dans le domaine médical, des arts visuels, des arts sociaux, mais également dans le domaine pédagogique, comprenant
un composant matériel pour l'acquisition optique analogique des images soit déplacées soit attirées sur une surface plate transparente dudit composant matériel, et un composant logiciel pour le traitement des images acquises et la conversion de leur spectre visuel en spectre sonore ;
dans lequel le composant matériel comprend une chambre, dont la base supérieure est sensiblement constituée d'une plaque de matériau transparent et sur la base inférieure de laquelle un dispositif d'acquisition d'image est reçu, faisant face à la plaque transparente et configuré pour l'encadrer complètement ; dans lequel les parois latérales sont dotées de moyens d'éclairage configurés pour garantir un éclairage correct de la surface interne de la plaque transparente qui forme un espace de travail, ainsi qu'une diffusion homogène de la lumière dans la partie supérieure de la chambre elle-même qui garantit l'uniformité d'éclairage sans ombre ni reflet par rapport à la lentille du dispositif d'acquisition, de manière à ne pas créer de zones qui sont trop vives ou trop dans l'ombre et altèrent l'acquisition d'image ;
et **caractérisé en ce que** le composant logiciel est configuré pour détecter chaque valeur RVB de chaque pixel acquis par le dispositif d'acquisition, et traiter et convertir les valeurs détectées afin d'associer, à chacun des pixels acquis, trois valeurs constituées de, respectivement :
- une valeur de fréquence de son, donnée par la somme des valeurs R, V et B converties dans la plage de fréquences auditives ;
- une valeur d'intensité de son, correspondant à la valeur de saturation provenant du réseau TSL, dans lequel ladite valeur de saturation, et ainsi ladite valeur d'intensité de son, est corrélée à l'espace occupé par lesdites images soit déplacées soit attirées sur la surface transparente plate du composant matériel ;
- une valeur de durée de son, correspondant à la valeur de luminosité provenant du réseau TSL, dans lequel ladite valeur de luminosité, et ainsi ladite valeur de durée de son, est corrélée avec le temps nécessaire pour déplacer ou attirer lesdites images sur la surface transparente plate du composant matériel ;
dans lequel lesdites trois valeurs correspondent à un son spécifique associé à un pixel acquis spécifique.

2. Système selon la revendication 1, **caractérisé en ce qu'**il comporte au moins deux moyens d'éclairage opposés.

3. Système selon une ou plusieurs des revendications précédentes, **caractérisé en ce que** toutes les surfaces internes de la chambre, à l'exception de la plaque composée de verre ou d'un autre matériau transparent et des moyens d'éclairage, sont revêtues d'un matériau absorbant la lumière qui permet d'éviter la diffusion et la réfraction de lumière et de reflets indésirables à l'intérieur du module.

4. Système selon la revendication précédente, **caractérisé en ce que** le matériau absorbant la lumière est un revêtement de velours noir adhésif.

5. Système selon la revendication 1, **caractérisé en ce que** ledit dispositif d'acquisition d'image est configuré pour transmettre les images audit composant logiciel dédié, conçu pour mettre en œuvre la conversion du spectre visuel en spectre audio.

6. Système selon la revendication 1 ou 5, **caractérisé en ce que** ledit dispositif d'acquisition d'image est interchangeable, en étant sélectionnable entre des dispositifs en couleurs ou monochromes et avec différentes résolutions de pixels.

7. Système selon la revendication 1 **caractérisé en ce que** ledit dispositif d'acquisition d'image est doté d'une lentille dont la configuration est telle qu'elle « isole » la surface de travail bidimensionnelle, par le biais de l'effet de profondeur de champ, de manière à présenter seulement la surface externe de la plaque transparente dans la mise au point, et excluant tout au-delà de la surface de travail par le biais d'un floutage optique progressif.

8. Système selon la revendication précédente, **caractérisé en ce que** l'agencement du dispositif d'acquisition d'image est établi par le calcul d'un angle de champ entre 40° et 55° de manière à simuler un angle de vue qui est similaire à celui de l'œil humain et à réduire les distorsions géométriques naturelles provoquées par l'optique de prise de vue, ce qui contribue à la sélection et à l'étalonnage corrects du plan de mise au point de l'optique elle-même sur la zone de travail bidimensionnelle représentée par la plaque transparente.

9. Système selon la revendication 1, **caractérisé en ce que** ledit composant logiciel est sensiblement constitué d'une correction de programme qui agit sur un programme commercial, connu sous le nom de MAX MSP par Cycling' 74, par exemple.

10. Procédé pour l'acquisition, l'analyse, et la conversion en temps réel du spectre visuel de formes, d'images, de couleurs, et de signes en spectre sonore, qui peut être utilisé dans divers contextes de communication, tels que dans le domaine des jeux vidéo interactifs, de la science informatique, des neurosciences et de la neuroimagerie dans le domaine médical, des arts visuels, des arts sociaux, mais également dans le domaine pédagogique, comportant l'utilisation d'un système comprenant au moins un module matériel, comprenant des moyens d'acquisition d'image, et un module logiciel, dans lequel lesdits modules sont fonctionnellement connectés pour acquérir le spectre visuel des images et le traiter pour convertir le spectre visuel en un spectre sonore selon les étapes suivantes :
- l'acquisition de l'image qui est déplacée ou attirée sur une surface de travail transparente plate du module logiciel par les moyens d'acquisition d'image au moyen d'un dispositif optique avec la détection des pixels de ladite image ;
- le traitement des pixels d'image acquis par le module logiciel pour détecter chaque valeur RVB de chaque pixel acquis ;
**caractérisé par**
- le traitement et la conversion des valeurs RVB détectées en valeurs TSL afin d'associer, à chacun des pixels acquis, trois valeurs constituées de, respectivement : une valeur de fréquence de son, donnée par la somme des valeurs R, V et B converties dans la plage de fréquences auditives ; une valeur d'intensité de son, correspondant à la valeur de saturation provenant du réseau TSL, et une valeur de durée de son, correspondant à la valeur de luminosité provenant du réseau TSL,
dans lequel :
- ladite valeur de saturation, et ainsi ladite valeur d'intensité de son, est corrélée à l'espace occupé par lesdites images soit déplacées soit attirées sur la surface transparente plate du module matériel ; et
- ladite valeur de luminosité, et ainsi ladite valeur de durée de son, est corrélée au temps nécessaire pour déplacer ou attirer lesdites images sur la surface transparente plate du module matériel.

11. Système selon la revendication 1 **caractérisé en ce qu'**il comprend en outre un appareil de génération de neuroimagerie, configuré pour :
- acquérir des données relatives à l'activité cérébrale d'un utilisateur qui déplace ou attire lesdites images sur la surface plate transparente dudit composant matériel en temps réel, et
- générer l'image correspondante de ladite activité cérébrale en temps réel ;
dans lequel ledit composant logiciel est configuré pour également traiter ladite image d'activité cérébrale et générer un son qui peut être ajouté à celui généré par le traitement des images acquises par lesdits moyens d'acquisition d'image.
